Europäisches Patentamt

European Patent Office

Office européen des brevets

(19)

(11) Publication number: **0 213 558**
**A1**

(12) # EUROPEAN PATENT APPLICATION

(21) Application number: 86111569.9

(22) Date of filing: 21.08.86

(51) Int. Cl.4: **G01S 13/56**

(30) Priority: 23.08.85 US 768858

(43) Date of publication of application:
**11.03.87 Bulletin 87/11**

(84) Designated Contracting States:
**AT BE CH DE FR GB IT LI LU NL SE**

(71) Applicant: **C & K Systems, Inc.**
**2040 Fortune Drive**
**San Jose California 95131(US)**

(72) Inventor: **Butt, Eric Camburn**
**22 De Sabla Road**
**San Mateo, Cal. 94402(US)**

(74) Representative: **Bernhardt, Klaus**
**Radeckestrasse 43**
**D-8000 München 60(DE)**

(54) A method and an apparatus for detecting an intruder.

(57) In the present invention, a microwave intrusion detection device is disclosed. The microwave intrusion detection device is an improvement to a microwave intrusion detection device of the type wherein the Gunn oscillator to generate the microwave radiation is also used as a detector to produce the Doppler shifted signal. The improvement to such a microwave intrusion detection device is to form a pulse train signal and supplying the pulse train signal to the Gunn oscillator. The output of the Gunn oscillator which is representative of the radiation reflected from a moving object is a signal from which the pulse train signal is filtered. The filtered signal is then processed to produce an alarm condition in the event the moving object is detected.

EP 0 213 558 A1

## A METHOD AND AN APPARATUS FOR DETECTING AN INTRUDER

Technical Background

The present invention relates to an improved microwave intrusion detection device and, more particularly, to an improvement to a microwave intrusion detection device of the type which has an oscillator for generating the microwave radiation directed at a space and the very same oscillator to detect the radiation reflected from that space.

Background Of The Invention

Microwave intrusion detection devices are well-known in the art. More particularly, microwave intrusion detection devices of the type wherein an oscillator generates the microwave radiation directed at a space and the very same oscillator is used to detect the radiation reflected from a moving object in that space is known in the prior art. See, for example, U.S. Patent No. 4,117,464. One of the advantages of such a prior art device is that the detector is the very same unit which causes the generation of the microwave radiation. A separate detector, such as a Schottky diode, is not required. Thus, manufacturing cost can be lowered.

Microwave intrusion detection devices of the type wherein a pulse train is used to activate the microwave generator are also well-known in the art. The pulse train signal is impressed upon the Gunn diode or the microwave oscillator generator to produce a pulse train of microwave radiation. The advantage of such a type of device is that radiation is not constantly emitted but, rather, is emitted intermittently in a pulse train. Thus, the power requirement of such a system is greatly reduced.

Summary Of The Invention

In the present invention, a microwave intrusion detection device is disclosed. The microwave intrusion detection device is of the type which has means for generating microwave radiation and for producing a detected signal which is representative of the radiation reflected by a moving object. The improvement to such a device comprises means for forming a pulse train signal. The pulse train signal is supplied to the microwave generating · means. The pulse train signal is filtered from the detected signal to produce a filtered signal. The device further has means for processing the filtered signal to produce an alarm in the event a moving object is detected.

The present invention also relates to a method of detecting a moving intruder.

Brief Description Of The Drawings

Fig. 1 is a schematic drawing of a part of the microwave intrusion detection device of the present invention.

Fig. 2 is a schematic drawing of another part of the microwave intrusion detection device of the present invention.

Fig. 3 is a schematic drawing of a passive infrared intrusion detection device which can be used with the microwave intrusion detection device of the present invention in a dual sensor configuration.

Detailed Description Of The Drawings

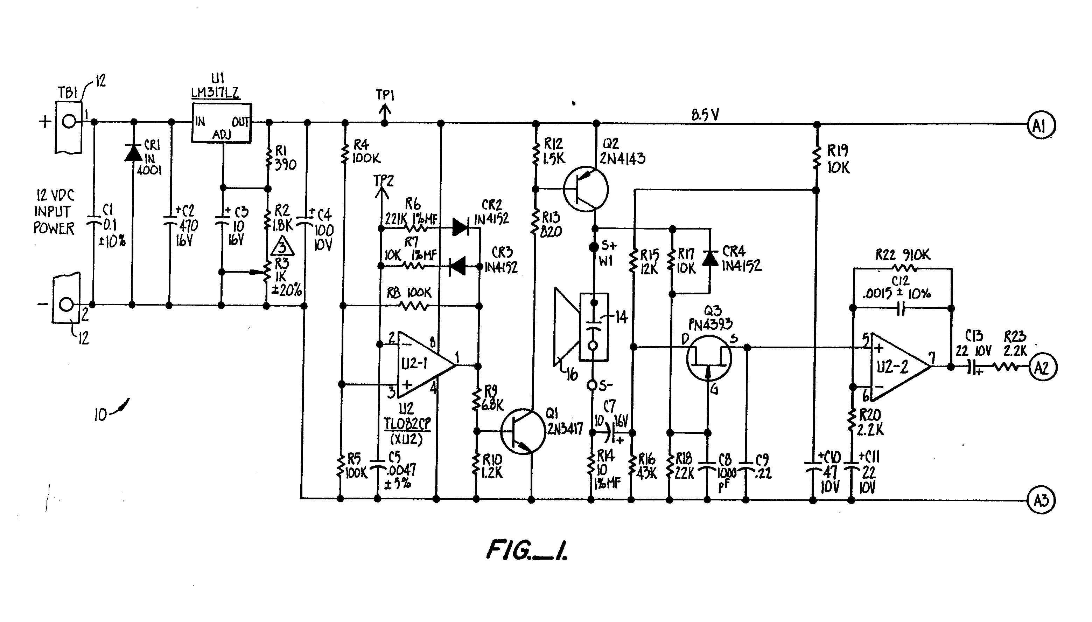

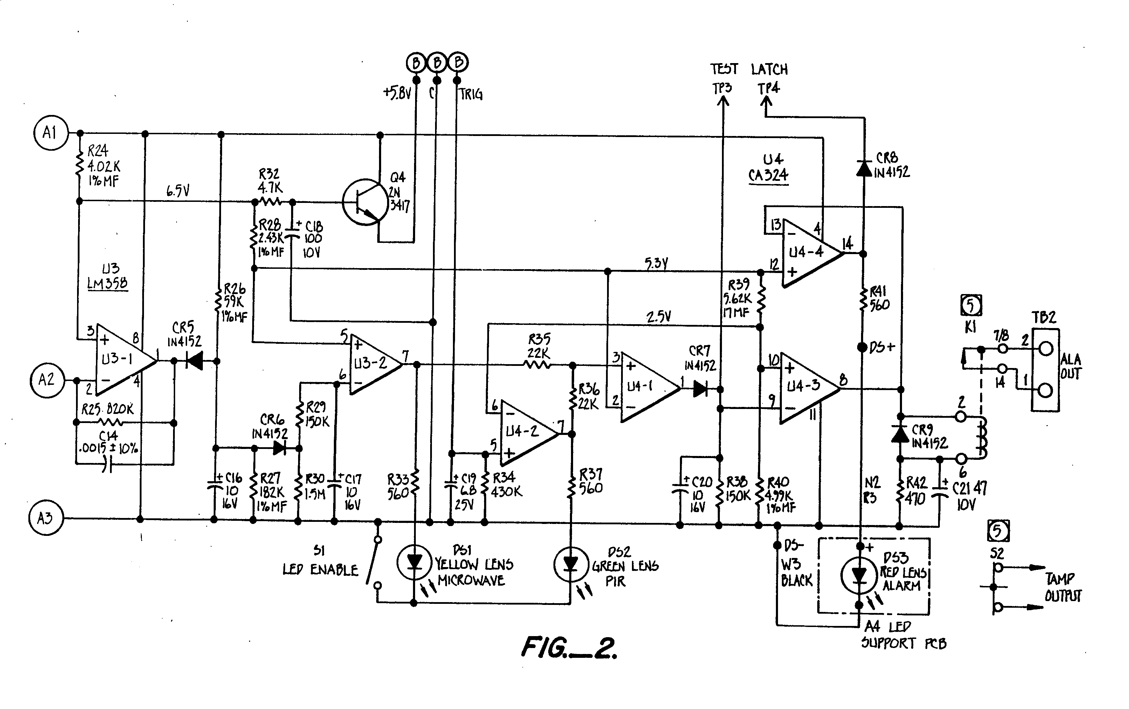

Referring to Fig. 1, there is shown a schematic circuit diagram of a portion of the microwave intrusion detection device 10 of the present invention. The schematic diagram of the other portion of the microwave intrusion detection device 10 of the present invention is shown in Fig. 2.

The microwave intrusion detection device 10 comprises a connector 12 for connecting the device 10 to a source of 12 volt DC input power. The power is supplied to a capacitor C1 and a diode CR1 and a capacitor C2 which are all connected in parallel. The power is then supplied to a U1 which is a voltage regulator integrated circuit. From the U1 and the resistors R1, R2 and R3, an output power of 8.5 volts is supplied on the lines A1 and A3.

An integrated circuit U2-1 produces a pulse train on its output pin 1. The pulse rate and the duty cycle of the pulse train is determined by resistors R6, R7 and by the capacitor C5. With the resistors R6 and R7 having the values of 221K and 10K, respectively, and the capacitor C5 having a value of .0047 microfarads, the pulse train from the output of the U2-1 has a nominal 1 KHz pulse repetition frequency (PRF) with an on-time nominal duty cycle of 43 microseconds.

That pulse train is supplied through resistor R9 to transistor Q1. Transistor Q1 is a NPN driver transistor whose collector is connected through R13 to the base of a PNP transistor Q2. The emitter of transistor Q2 is connected to the power supply bus A1. Transistor Q2 acts as a low impedance switch. The collector of the transistor Q2 is connected to a Gunn diode 14.

The function of transistor Q1 is to provide adequate drive to the base of transistor Q2 and thus ensure that the PNP transistor Q2 is switched at high speed and "turned on hard". Once the PNP transistor Q2 is turned on, current flow from the bus A1 to the Gunn diode 14 which causes the Gunn diode 14 to produce microwave radiation.

The microwave electromagnetic energy is radiated from a horn antenna 16 into a space. The microwave energy reflected from that space is also collected by the same antenna 16. If a moving intruder were in that space, a Doppler shift signal, impressed upon the 1 KHz PRF signal, would be received by the Gunn diode 14 and passed through the capacitor C7 to the drain terminal of N-Channel Field Effect Transistor Q3.

The Doppler shifted signal, superimposed on the 1 KHz PRF is passed through a low impedance analog high speed switch Q3. The resistor R17 and capacitor C8 slows the turning on of the low impedance switch Q3 by approximately ten microseconds. This is because, as the Gunn diode 14 is turned on, some spurious noise may occur. Thus, for approximately the first ten microseconds of the 43 microsecond duty cycle, resistor R17 and capacitor C8 act as a delay network to inhibit switching that portion of the signal. Diode CR4 ensures that the low impedance switch Q3 turns the signal off quickly once the 43 microsecond duty cycle is completed.

From the low impedance switch Q3, the signal is then sent to a sample and hold capacitor C9 which updates the signal once every millisecond, which is the same frequency as the frequency of the 1 KHz PRF pulse train signal.

The signal from transistor Q3 is then DC coupled to a non-inverting amplifier U2-2. U2-2 has connected between its output and its input a feedback pole comprising of a resistor R22 connected in parallel with a capacitor C12 which, together, also acts as a lowpass active filter. The bandpass characteristics of the active filter allow amplification of the Doppler signal and attenuate the 1 KHz PRF signal. The output of the U2-2 amplifier is AC coupled to an inverting amplifier U3-1. The second amplifier U3-1 also has a feedback pole comprised of resistors R25 and capacitor C14 connected in parallel which also acts as a lowpass active filter. The active filter comprising of the resistor R25 and capacitor C14 acts in the same manner as the resistor R22 and capacitor C12 in that they allow amplification of the Doppler signal and attenuate the 1 KHz PRF signal. Thus, the output of the U3-1 amplifier is a signal comprising of just the Doppler shifted signal, without the 1 KHz PRF signal.

If a moving intruder were detected in the space into which the microwave radiation was directed, a Doppler shifted signal would be produced on the output pin 1 of amplifier U3-1. The Doppler shifted signal would have a negative component and a positive component. The negative component of the Doppler shifted signal discharges capacitor C16 which is biased high through resistor R26. When the positive bias is removed from the anode of diode CR6, then the negative component of the Doppler shifted signal also causes capacitor C17 to discharge through resistor R29 and resistor R30. In the quiescent state, the positive bias provided by divider network resistor R26 and resistor R27 is passed through diode CR6 and resistor R29 to charge capacitor C17. Thus, capacitor C17 is a memory hold in that it holds the charge of the positive component of the quiescent or non-alarm state of the Doppler amplifier.

Capacitor C17 is also connected to input 6 - (negative input) of comparator U3-2. Input 6 is biased higher than input 5 so that normally the output of comparator U3-2 at the output 7 is low. When input 6 of comparator U3-2 goes below input, then the output of the comparator U3-2 would go high. Since it takes approximately two seconds for capacitor C17 to discharge through resistor R29 and resistor R30 to cause input 6 to go below the level of input 5 to trigger output 7, the connection of capacitor C17 to the comparator U3-2 is a hold on integrating the Doppler shifted signal for approximately two seconds.

The output of the comparator U3-2 or output pin 7 is suppled to the input pin 3 of an AND gate U4-1. The second input of the AND gate U4-1 is the input pin 2 which is supplied from the Passive Infrared Radiation Detector, which will be discussed later. The output of the AND gate U4-1 is supplied to the input pin 9 of the relay driver U4-3. Output of the U4-3 relay driver is then connected to a relay K1. The relay K1 contacts are shown in the energized or out-of-alarm state. Thus, if there is a power failure, the relay K1 contacts would open triggering a continuous alarm output.

In the operation of the microwave intrusion detection device 10 of the present invention, pulse generator U2-1 produces a DC pulse train signal of 1 KHz PRF with 43 microsecond duty cycle. The pulse train signal is supplied to the NPN driver transistor Q1 which switches the PNP switch transistor Q2. The pulse train signal causes power to be delivered from the bus line A1 to the Gunn diode 14 at the rate of 1 KHz PRF with 43 microsecond duty cycle. The microwave radiation is generated at that same duty cycle and is radiated by the horn antenna 16 directed at a space. The reflected radiation is collected by the antenna 16 and produces a Doppler shifted signal.

That signal is sampled and held by capacitor C9 which is sampled at the rate of 1 KHz, the same rate as the pulse train signal. From the sample and hold capacitor C9, the signal is DC coupled and is supplied to a two-stage amplifier with a bandpass active filter for each stage, which in effect decouples the Doppler signal from the 1 KHz pulse train. The Doppler signal then controls the state of charge on a memory hold capacitor C17 and the inverting input of a comparator U3-2 which in effect delays change of state for approximately two seconds. This is to prevent false alarm conditions. The output of the U3-2 is supplied to an AND gate which has one of its inputs, the output of the microwave intrusion detection device of the present invention and the other output from a Passive Infrared Radiation Detection Device. The output of the AND gate trips a relay driver which produces an alarm output.

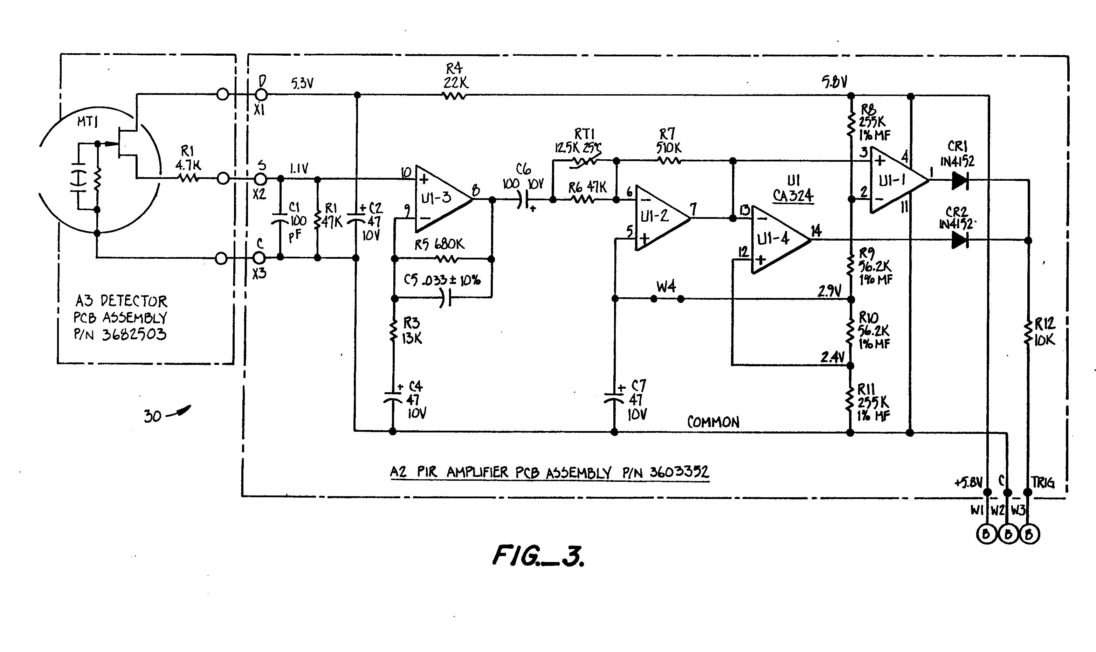

Referring to Fig. 3, there is shown a schematic drawing of a Passive Infrared Radiation Detection Device 30 which can be used with the microwave intrusion detection device 10 of the present invention in a dual sensing configuration.

The Passive Infrared Radiation Detection Device 30 comprises an infrared detector MTI whose signal is supplied to a resistor R1 which is connected in series with a capacitor C1. The resistor R1 has 4.7 K resistance with C1 at 100 picofarad. The purpose of the R1, C1 network is to filter UHF signals in the 800-900 MHz bands to avoid RF interference. The signal from the MTI detector is DC coupled to a non-inverting operational amplifier U1-3 and then AC coupled to an inverting amplifier the gain of which is thermally compensated by thermistor RT1 and resistor R6, connected in parallel. The positive component of the signal from the PIR detector MTI is supplied to a voltage comparator U1-1. The negative component is supplied to an inverter and voltage comparator U1-4, to provide a high (positive) output when the input exceeds the logic threshhold voltage. The outputs of the U1-1 and U1-4 voltage comparators are connected to steering diodes CR1 and CR2, respectively, which are then connected together at the cathode terminals to form an OR gate output. The OR gate output is then supplied through resistor R12 to capacitor C19 and resistor R34 (shown in Figure 2) to form a pulse stretching network, with a nominal time constant of three (3) seconds. The signal from this pulse stretching network is then supplied to the non-inverting input of a pump-up voltage comparator U4-2. The output of U4-2 or pin 7 is then supplied through resistor R36 into the non-inverting input of the AND gate U4-1. An alarm condition is produced when both the PIR detector 30 and the microwave intrusion detection device 10 of the present invention detect an alarm condition at the same time. The output of the AND gate U4-1 would then trip the relay driver U4-3, causing the relay K1 to produce an alarm condition.

## Claims

1. In a microwave intrusion detection device of the type having means for generating microwave radiation and for producing a detected signal representative of the radiation reflected by a moving object, wherein the improvement comprising:

means for forming a pulse train signal;

means for supplying said pulse train signal to said generating means;

means for filtering said pulse train signal from said detected signal to produce a filtered signal; and

means for processing said filtered signal to produce an alarm.

2. The device of Claim 1 wherein said supplying means further comprises:

driver means for receiving said pulse train signal; and

switch means connected between a power source and said generating means;

said driver means connected to said switch means for operating said switch means.

3. The device of Claim 1 further comprising:

sample and hold means for holding said detected signal.

4. The device of Claim 1 wherein said processing means comprising:

memory means for holding said filtered signal;

comparator means for comparing said memory means to a pre-set threshold; and

means for generating an alarm in the event said comparator means changes state.

5. The device of Claim 3 wherein said pulse train signal has a frequency.

6. The device of Claim 6 where said sample and hold means holds said detected signal at said frequency.

7. A microwave intrusion detection device comprising:

means for generating microwave radiation;

means for directing said microwave radiation at a space;

means for detecting radiation reflected from said space and for generating a detected signal;

means for generating a pulse train signal;

means for supplying said pulse train signal to said microwave radiation generating means;

means for filtering said pulse train signal from said detected signal to produce a filtered signal; and

means for processing said filtered signal to produce an alarm in the event a moving object is detected.

8. The device of Claim 7 wherein said supplying means further comprises:

driver means for receiving said pulse train signal;

switch means connected between a power source and said microwave radiation generating means; and

said driver means connected to said switch means to activate said switch means.

9. The device of Claim 7 further comprising:

sample and hold means for holding said detected signal.

10. The device of Claim 9 wherein said pulse train signal has a frequency.

11. The device of Claim 10 wherein said sample and hold means holds said detected signal at said frequency.

12. The device of Claim 7 wherein said processing means comprises:

memory means for holding said filtered signal;

comparator means for comparing said memory means to a pre-set threshold; and

means for generating an alarm in the event said comparator means changes state.

13. A method of detecting a moving intruder in a space, said method comprising the steps of:

forming a pulse train signal;

supplying said pulse train signal to a self-detecting microwave radiation generating means;

generating a pulse train of microwave radiation from said self-detecting microwave generating means;

radiating said microwave radiation in said space;

detecting microwave radiation reflected from said space by said self-detecting generating means;

producing a detected signal from said self-detecting microwave generating means;

filtering said pulse train signal from said detected signal to produce a filtered signal; and

processing said filtered signal to produce an alarm in the event a moving intruder is detected.

FIG._1.

FIG._2.

FIG_3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-2 476 878 (ESTEBAN)<br><br>* Page 3, line 22 - page 10, line 23; figures 1-3 * | 1-3,5-11,13 | G 01 S 13/56 |
| Y | | 3,12 | |
| | --- | | |
| Y | US-A-3 331 065 (J.C. McDONALD)<br>* Column 3, lines 5-48; figure 1 * | 3,12 | |
| | --- | | |
| X | FR-A-2 315 733 (TACUSSEL)<br><br>* Whole document * | 1-3,5-11,13 | |
| | --- | | |
| A | US-A-4 197 537 (R.J. FOLLEN et al.)<br>* Column 3, line 30 - column 6, line 54; figures 2,3 * | 1-13 | TECHNICAL FIELDS SEARCHED (Int. Cl.4)<br><br>G 01 S |
| | --- | | |
| A | US-A-4 322 722 (P.J. KOZDON)<br>* Column 2, line 53 - column 5, line 48; figures 1-3 * | 1-13 | |
| | --- | | |
| A | US-A-4 131 889 (K.W. GRAY)<br>* Abstract; figure 1 * | 1-13 | |
| | ----- | | |

The present search report has been drawn up for all claims

| Place of search<br>THE HAGUE | Date of completion of the search<br>21-11-1986 | Examiner<br>VAN WEELE J.G. |
|---|---|---|